Europäisches Patentamt

European Patent Office

Office européen des brevets

(11) Publication number: **0 150 743**
**B1**

(12) **EUROPEAN PATENT SPECIFICATION**

(45) Date of publication of patent specification: **11.05.88**

(51) Int. Cl.⁴: **A 23 C 19/032, A 23 C 19/04**

(21) Application number: **85100267.5**

(22) Date of filing: **12.01.85**

(54) Enzyme preparation for accelerating the aging process of cheese.

(30) Priority: **27.01.84 US 574369**

(43) Date of publication of application:
**07.08.85 Bulletin 85/32**

(45) Publication of the grant of the patent:
**11.05.88 Bulletin 88/19**

(84) Designated Contracting States:
**DE FR GB**

(56) References cited:
**US-A-3 156 568**
**US-A-4 119 732**
**US-A-4 172 900**

**CHEMICAL ABSTRACTS, vol. 94, no. 17, April 1981, page 617, no. 138002z, Columbus, Ohio, US; G. CHIKUMA et al.: "Promotion of cheese ripening. III. Influence of bacteria and enzyme" & CHIKUSAN SHIKENJO KENKYU HOKOKU 1979, (35), 131-147**

**The file contains technical information submitted after the application was filed and not included in this specification**

(73) Proprietor: **MILES INC.**
**1127 Myrtle Street**
**Elkhart Indiana 46514 (US)**

(72) Inventor: **Barach, Jeffrey T.**
**1714 Canterbury Drive**
**Elkhart, IN 46514 (US)**
Inventor: **Talbott, Larry L.**
**51723 Northfield Drive**
**Elkhart, IN 46514 (US)**

(74) Representative: **Adrian, Albert, Dr. et al**
**c/o BAYER AG Konzernverwaltung RP Patentabteilung**
**D-5090 Leverkusen 1, Bayerwerk (DE)**

(56) References cited:

**JOURNAL OF DAIRY SCIENCE, vol. 54, no. 5, May 1971, pages 643-647; G.H. RICHARDSON et al.: "Gastric lipase characterization and utilization in cheese manufacture"**

# 0 150 743

**Description**

Background of the invention

This invention involves a composition and a method for the accelerated aging of American cheese, e.g. cheddar cheese, colby cheese, monterey and jack cheese. State of the art technology for accelerated cheese aging typically employs 1 of 2 approaches other than just raising the curing temperature. The first approach utilizes selected microorganisms in addition to the conventional cheesemaking ingredients whereas the second approach advocates the use of enzymes, in some cases from the same class of organisms, which are added during the cheese manufacturing process.

Cheese flavor is a complex mixture of several hundred flavor components. The balance is especially critical to obtaining the typical organoleptic preception associated with cheese flavor. Also, associated with aging is body breakdown or softening. The complexity of the flavor and the opportunity for off-flavor development have precluded the commercialization of an effective cheese aging product.

Associated with the aging and flavor development of cheese is the overall hydrolysis of the major components thereof, i.e. the conversion of protein and fat to peptides and free fatty acids, respectively. Much focus has been placed on the role of proteolytic and lipolytic enzymes, e.g. lipases and esterases, from dairy microorganisms and from rennet during the ripening process. The formation of volatile fatty acids is routinely observed during the ripening process, however, the sources of these lipases and esterases are relatively undefined. Some authors assign lipolytic action to the milk lipase while others believe that contaminating microorganisms such as *Micrococci sp.* are the source of fat hydrolyzing enzymes. Current theories suggest that the flavor components of cheese are not necessarily the direct result of proteolysis and liopolysis, but instead are the result of precursor compounds generated by the gross hydrolysis of casein and fat which have been further converted by relatively obscure pathways.

The balance of flavor components during cheese aging is a very delicate and complex process. Although the process is not well-understood, certain investigators have developed theories regarding the natural process and have consequently proposed methods to accelerate this process. Kratochvil discloses in U.S. patent 4,119,732 a process for the manufacture of American cheese which involves the addition of specific pairs of strain of *Lactobacillus plantarum* and *Streptococcus durans* in combination with pre-gastric lipases during the cheesemaking process with subsequent curing of the cheese at elevated temperatures. In U.S. patent 4,158,607, Kalinowski, et al disclosed an enzymatic preparation composed of the protease from *Penicillium candidum* or *P. roqueforti* and the autolysate of a lactic acid bacteria from the species *Streptococcus lactis* or *Lactobacillus casei*. International Patent publication WO 82/03971 having an international publication date of November 25, 1982, discloses a method of producing a low-fat cheese product which involves inoculating milk with a culture of *L. bulgaricus* and *S. thermophilus* together with a culture of *L. casei* and a normal cheese starter culture. The first two organisms are said to produce the required flavor and rapid fermentation of lactose whereas the *L. casei* assists in the hydrolysis of protein.

Summary of the invention

The present invention is a composition for accelerating the aging process of cheese which comprises:
a) a preserved, partially disrupted preparation of the lactic acid bateria *Lactobacillus casei, L. lactis* or a mixture thereof;
b) a preserved culture concentrate of partially disrupted cells of *Lactobacillus plantarum;* and
c) a blend of dried pre-gastric lipases.

Also included within the scope of this invention is a method of accelerating the aging of cheese and/or preventing the development of defects during the aging process using this preparation.

Description of the invention

The cheese aging preparation of the present invention can be prepared by providing the three major ingredients in a premixed form so that they can be added to the milk during the cheesemaking process. Conversely, the ingredients may be added individually in whatever order is most convenient to the cheese-maker. The amounts and activity of the ingredients to be used are as follows:

2

| Ingredient | Range | % (W/W) total milk |
|---|---|---|
| L. casei or L. lactis | Preferred | 0.025—0.03% at a standard* protease level (140 PU/g) |
| | Operable | 0.001—0.05% at a standard protease level (140 PU/g) |
| | | *Standard Protease Unit (PU)=the amounts of enzyme required to cause an increase in adsorbance at 660 nm which is equivalent to the release of 0.1 µmole of tyrosine/hr/ml using a casein solution and the Folin reaction. |

| | | Based on cell population before disruption |
|---|---|---|
| L. plantarum | Preferred | $5 \times 10^6$ CFU/ml of milk** |
| | Operable | $1 \times 10^4$—$5 \times 10^7$ CFU/ml of milk |
| | | **CFU=Colony Forming Units using ATP Agar (Difco Laboratories) for 48 hours at 37°C |

| | | Grams/454 kg of milk |
|---|---|---|
| Kid & Calf lipases*** | Preferred | 0.30—0.35 g/454 kg of milk (kid) |
| | | 0.13—0.18 g/454 kg of milk (calf) |
| | Operable | 0.015—1.0 g/454 kg of milk (kid) |
| | | 0.0075—0.5 g/454 kg of milk (calf) |

***Kid @ 2,500 RU/g
Calf @ 5,500 RU/g

| | | |
|---|---|---|
| Neutral Microbial Protease | Preferred | 40,000—160,000 PU/454 kg of milk |
| | Operable | 0—600,000 PU/454 kg of milk |

RU=Ramsey units as determined by the assay described in *Journal of Dairy Service*, Vol. 50 (7) p. 1061 (1967). A selected strain of *Lactobacillus casei* or *L. lactis* (preferably ATCC 39539 or ATCC 39538, respectively) is cultured in a hydrolyzed milk-based growth medium which is fortified with yeast extract and mineral salts. Cell biomass is produced during incubation for 16 to 24 hours at 37°C while the pH of the medium is controlled to a set point of 6.5 with $NH_4OH$ additions. Cells are separated using centrifugation and the culture concentrate is subjected to mild disruption by several passes in a 2-stage homogenizer at 281 kg/cm² pressure (4,000 PSI) or by other methods such as sonication autolysis or enzymatic-lysis such as by lysozyme addition. In a preferred embodiment, the preparation contains *L. casei* or *L. lactis* cells of which approximately 67% are disrupted when subjected to disruption by standard techniques. Total cell disruption is not unsatisfactory but typically, the amount of disruption will be from 20% to 80% for both the *L casei, L. lactis* and *L. plantarum* described below. Any gentle method of preserving the partially disrupted product, such as freezing, freeze-drying or fluidized bed drying, is acceptable. Preferably, a suitable carrier is added and the complex is spray-dried under conventional conditions.

Frozen of dried culture concentrates of *Lactobacillus plantarum* are commercially available or can be prepared in a manner as described above for *L. casei*. If a commercial preparation is obtained, it should be mildly disrupted as is the case with *L. casei* and *L. lactis* so that the *L. plantarum* component contains about 23% disrupted cells. The disruption causes the cells to lyse more rapidly and provides more opportunity for enzyme substrate reactions to occur. Our preferred strain of *L. plantarum* is ATCC 39542. Kid lipase and calf lipase are commercially available. Other animal, plant or microbial lipases which have a similar specificity may also be used. Suitable specificity for a particular lipase or combination of lipases can be determined by

**0 150 743**

inoculating varying levels of lipolytic enzyme into a fresh cheddar cheese slurry containing 50—55% moisture. This slurry can be incubated at elevated temperatures (30°—37°C) for varying lengths of time. Organoleptic evaluation must be made on a daily basis to determine acceptability of the free fatty acids balance relative to an aged cheddar cheese balance. As an example, a small quantity of slurry is removed for evaluation periodically throughout the incubation period. Early in the flavor development period, the slurried material can be graded directly without dilution. As the free fatty acid flavor intensifies with time, the slurry can be diluted in low fat milk at 6.0% for grading. This bland milk medium aids as a carrier for improved sensory judgments. These lipases, while known to be useful in cheese manufacture, work synergistically with the particular *lactobacillus* microorganisms described herein to provide the desired curing of American cheese so as to provide the desired flavor in a shorter time than would be the case without the addition of the fast curing ingredients.

An optional fourth ingredient in the preparation of the present invention is a microbial, neutral protease having specific activity of 650,000 PU/g and used in an amount of from zero to 600,000 protease activity units (PU) per 454 kg of milk as determined by the standard protease assay. Suitable proteases can be obtained from *Bacillus subtilus, B. amyloliquefacians* and *Aspergillus oryzae.*

The known methods of making American cheese involve adding milk (adjusted to a temperature of from 30° to 32°C (86°F to 90°F) to the cheesemaking vat. A starter comprising a lactic acid producing bacteria is added to the milk and stirred as the milk ripens due to the development of acidity through bacterial action. The preparation for accelerated aging described herein is preferably added to the cheese milk before the addition of coagulant but can also be added to the curd with salt before pressing. Rennet (either animal or microbial in origin) is then mixed thoroughly into the ripened milk and the stirring is stopped whereupon the milk is permitted to sit so as to form a coagulum or curd. When the curd is sufficiently firm, it is cut into cubes which are stirred continuously as the whey is expelled during which time the curd is usually heated over a period of about 1/2 hour to a temperature of about 39°C (102°F). After draining the whey from the curd, the curd is packed several inches deep, and when the curd is firm enough to be turned without breaking, it is cheddared, that is cut into slabs about 17.5 cm (7 inches) wide, and turned frequently. After cheddaring, the curd is milled and stirred while salt is added. This causes additional whey to be expelled.

After salting and draining, the curd is placed in cloth-lined metal hoops and pressed for several hours to form a cheese. After pressing, the cheese is removed from the hoop and wrapped in a suitable material for curing and aging.

Curing usually requires at least 60 days to provide what is known as young or low-flavored cheese. Lengthier curing periods of from about 3 to 6 months provide mildly flavored cheddar cheese. Aged cheddar cheese is produced by curing for 6 to 12 months or longer in some cases.

The length time required for aging results in very substantial space requirements to produce and store large quantities of cheese. Thus, the economic advantages of accelerating the aging process are apparent.

The method of practicing the present invention is further illustrated by the following examples:

Example I

To 18,144 kg (40,000 pound) quantities of cheese milk the following ingredients were added as it was added to a cheese vat:

1) 0.8% fully-ripened bulk starter containing a high population of S. Cremoris and S. Lactus.
2) 1589.0 g of dried *L. casei* or *L. lactis* having an activity of 480 protease units/g (67% disrupted cells).
3) 164.0 g of dried *L. plantarum* providing a count to the milk of $5.0 \times 10^6$ CFU/ml as based on the original culture concentrate count (23% disrupted cells).
4) powdered calf lipase (6.26 g) from a stock preparation of 2,500 RU/g.
5) kid lipase (13.12 g) from a stock source having 5,500 RU/g.

The preceding mixture was allowed to ripen for 1 hour after which 328 ml of single-strength calf rennet was added. The proper coagulum was formed within 30 minutes at which point cutting occurred. Standard cheesemaking procedures were followed to provide a cheddared curd which was milled when a pH of 5.40 was reached. The milled curd was salted to provide a finished product containing 1.8% (w/w) salt. The finished hooped curd had a final moisture content of 37.5% and fat content of 33.0%. The blocks were shrink film wrapped and aged at 10°C (50°F) for 3 months which results in the production of a typical aged cheddar cheese flavor. Longer aging at 10°C (50°F) results in strongly aged cheddar cheese flavors which simulate 12 month flavors with only 6 month storage.

The flavor development rate can be substantially reduced by lowering the aging temperature from 10°C (50°F) to 4.5°C (40°F) or below.

Example II

To 18,144 kg (40,000 pound) quantities of cheese milk the following ingredients were added as the milk was added to a cheese vat:

1) 0.8% fully-ripened bulk starter containing a high population of S. Cremoris and S. lactus.
2) 1589.0 g dried *L. casei* or *L. lactis* having an activity of 480 protease units/g.
3) dried *L. plantarum* providing a count to the milk of $5.0 \times 10^6$ CFU/ml as based on the original culture concentrate count.

4) powdered calf lipase (6.26 g) from a stock preparation of 2,500 RU/g.

5) kid lipase (13.12 g) from a stock source of lipase having 5,500 RU/g activity.

6) 10.0 g of protease from *Bacillus amyloliquefacieus* (dry powder having an activity of 650,000 PU/g).

The mixtures of special starters, enzymes and milk are allowed to ripen for 1 hour after which 93.7 g rennet powder (315%) is added for clotting purposes. The desired coagulum was formed within 30 minutes at which time cutting took place. Following standard cheesemaking procedures, the cheddared curd was milled when a pH of 5.40 was reached. The milled curd was salted to give a finished product of 1.8% and the finished hoop curd had a final moisture content of 37.5% and fat of 33.0%. The blocks were wrapped in shrink film and aged at 10°C (50°F) for 3 months during which time a typical aged cheddar cheese flavor is produced. This product can be further aged at 10°C (50°F) resulting in strongly aged cheddar cheese flavors simulating 12 month flavors with only 6 month storage. The flavor development rate can be substantially reduced by lowering the aging temperature from 10°C to 4.5°C (50°F to 40°F) or below.

While a curing temperature of 10°C (50°F) is preferred, a temperature range of 2°C to 16°C (36°F to 60°F) is suitable. In addition to accelerating the aging process, the preparation of the present invention has been found to prevent the development of defects in the cheese during the aging process. It has been observed in the typical day to day manufacturing of cheddar cheese that there are many variables which will influence the development of off-flavors. In the numerous field trials associated with this ripening system, the control vat of cheese on occasion has produced bitter, sulfur and/or out of balance, fruity, rancid flavor defects. These defects may be recognized at low levels after 1 to 2 months aging or, in some cases, after 3 to 6 months. Generally once these off-flavors are observed, they intensify very quickly. The experimental vats produced on the same day using the identical ingredients and cheese-making procedures as the control, scored very well in flavor evaluation.

Specific trials have been conducted where strongly bitter starter cultures have been intentionally used which resulted in bitter cheese within 2 months. Those vats containing the accelerated ripening system of the present invention have not produced this defect even when aged for 6 months and beyond.

## Claims

1. A composition for accelerating the aging process of cheese which comprises:

a) a preserved, partially disrupted preparation of the lactic acid bacteria *Lactobacillus casei, L. lactis* or a mixture thereof;

b) a preserved culture concentrate of partially disrupted cells of *Lactobacillus plantarum;* and

c) a blend of dried pre-gastric lipases.

2. The composition of claim 1 wherein the preserved lactic acid bacteria is dried *L. casei.*

3. The composition of claim 1 wherein the preserved lactic acid bacteria is dried *L. lactis.*

4. The composition of claim 3 wherein the *L. lactis* is designated as ATCC 39538.

5. The composition of claim 1 wherein the preserved *L. plantarum* is designated as ATCC 39542 and is in the dried form.

6. The composition of claim 1 wherein there is included a microbial neutral protease having a specific activity of 650,000 PU/g and is present in an amount of sufficient to provide up to 600,000 protease activity units per 454 kg of cheese milk.

7. The composition of claim wherein the pregastric lipase are calf or kid lipases.

8. A method for accelerating the aging process of American-type cheese which comprises adding to the cheese during its manufacture a composition which comprises:

a) a preserved, partially disrupted preparation of the lactic acid bacteria *Lactobacillus casei* or *L. lactis* or a mixture thereof wherein the *L. casei, L. lactis* or mixture thereof is present in an amount of from 0.001 to 0.05 weight percent of milk used in the cheese manufacture based on an activity of 140 standard protease units per gram of preserved lactic acid bacteria;

b) a preserved culture concentrate of partially disrupted cells of *Lactobacillus plantarum* present in an amount of from $1 \times 10^4$ to $5 \times 10^7$ CFU per milliliter of milk used in the cheese manufacture based on the cell population before disruption for accelerating the aging process of cheese;

c) a blend of dried pre-gastric lipases.

9. The method of claim 8 wherein the preserved lactic acid bacteria is dried *L. casei.*

10. The method of claim 8 wherein the preserved lactic acid bacteria is dried *L. lactis.*

11. The method of claim 10 wherein the *L. lactis* is ATCC 39538.

12. The method of claim 8 wherein the preserved *L. plantarum* is designated as ATCC 39542 and is in the dried form.

13. The method of claim 8 wherein the amount of the lactic acid bacteria is from 0.025 to 0.03 weight percent.

14. The method of claim 8 wherein the composition added to the cheese includes a microbial neutral protease having a specific activity of 650,000 PU/g in an amount sufficient to provide up to 600,000 protease activity units per 454 kg of milk used in the cheese manufacture.

15. The method of claim 8 wherein the pre-gastric lipase is kid lipase and is used in an amount equivalent to 0.015 to 1.0 gram per 454 kg of milk used in the cheese manufacture based on the kid lipase having an activity of 2,500 Ramsey Units (RU) per gram.

16. The method of claim 15 wherein the amount of kid lipase is from 0.30 to 0.35 g/454 kg of milk.

17. The method of claim 9 wherein the pre-gastric lipase is calf lipase and is used in an amount equivalent to 0.0075 to 0.5 gram per 454 kg of milk used in the cheese manufacture based on the calf lipase having an activity of 5,500 Ramsey Units (RU) per gram.

18. The method of claim 17 wherein the amount of calf lipase is from 0.13 to 0.18 g/454 kg of milk.

**Patentansprüche**

1. Zusammensetzung zum Beschleunigen des Alterungsprozesses von Käse, umfassend:

(a) eine haltbar gemachte, teilweise aufgebrochene Zubereitung der Milchsäurebackterien Lactobacillus casei, L. lactis oder einer Mischung davon;

(b) ein haltbar gemachtes Kulturkonzentrat von teilweise aufgebrochenen Zellen von Lactobacillus plantarum; und

(c) eine Mischung von getrockneten prägastrischen Lipasen.

2. Zusammensetzung gemäss Anspruch 1, bei welcher die haltbar gemachten Milchsäurebackterien getrocknete L. casei sind.

3. Zusammensetzung gemäss Anspruch 1, bei welcher die haltbar gemachten Milchsäurebakterien getrocknete L. lactis sind.

4. Zusammensetzung gemäss Anspruch 3, bei welcher die L. Lactis-Bakterien die Hinterlegungsnummer ATCC 39538 haben.

5. Zusammensetzung gemäss Anspruch 1, bei welcher die haltbar gemachten L. plantarum-Bakterien die Hinterlegungsnummer ATCC 39542 haben und in getrockneter Form vorliegen.

6. Zusammensetzung gemäss Anspruch 1, bei welcher eine mikrobielle neutrale Protease mit einer spezifischen Aktivität von 650.000 PU/g, die in einer Menge, die ausreicht, um 600.000 Proteaseaktivitätseinheiten pro 454 kg Käsemilch zu ergeben, eingeschlossen ist.

7. Zusammensetzung gemäss Anspruch 1, in welcher die prägastrische Lipase Kalbs- oder Ziegenlammlipasen sind.

8. Verfahren zur Beschleunigung des Alterungsprozesses von Käse vom amerikanischen Typ, bei dem man zu dem Käse während dessen Herstellung eine Zusammensetzung zugibt, die umfasst:

(a) eine haltbar gemachte, partiell aufgebrochene Zubereitung der Milchsäurebakterien Lactobacillus casei oder L. lactis oder eine Mischung davon, in welcher L. casei, L. lactis oder eine Mischung davon in einer Menge von 0,001 bis 0,05 Gew.% der bei der Käseherstellung verwendeten Milch, bezogen auf eine Aktivität von 140 Standard-Proteaseeinheiten pro g der haltbar gemachten Milchsäurebakterien vorliegt;

(b) ein haltbar gemachtes Kulturkonzentrat von teilweise aufgebrochenen Zellen von Lactobacillus plantarum, die in einer Menge von $1 \times 10^4$ bis $5 \times 10^7$ CFU pro Milliliter der bei der Käseherstellung verwendeten Milch, bezogen auf die Zellpopulation vor dem Aufbrechen zur Beschleunigung des Alterungsprozesses des Käses verwendet wird;

(c) eine Mischung von getrockneten prägastrischen Lipasen.

9. Verfahren gemäss Anspruch 8, in welchem die haltbar gemachten Milchsäurebakterien getrocknete L. casei-Bakterien sind.

10. Verfahren gemäss Anspruch 8, bei welchem die haltbar gemachten Milchsäurebakterien getrocknete L. lactis-Bakterien sind.

11. Verfahren gemäss Anspruch 10, bei dem die L. lactis-Bakterien ATCC 39538 sind.

12. Verfahren gemäss Anspruch 8, bei welchem die haltbar gemachten L. plantarum-Bakterien die Bezeichnung ATCC 39542 erhalten haben und in getrockneter Form vorliegen.

13. Verfahren gemäss Anspruch 8, bei welchem die Menge an Milchsäurebakterien im Bereich von 0,025 bis 0,03 Gew.% liegt.

14. Verfahren gemäss Anspruch 8, bei dem die zu dem Käse zugegebene Zusammensetzung eine mikrobielle neutrale Protease mit einer spezifischen Aktivität von 650.000 PU/g in einer Menge, die ausreicht, um 600.000 Proteaseaktivitätseinheiten pro 454 kg der bei der Käseherstellung verwendeten Milch zu ergeben, einschliesst.

15. Verfahren gemäss Anspruch 8, bei dem die prägastrische Lipase Ziegenlammlipase ist und in einer Menge, die 0,015 bis 1,0 g pro 454 kg der bei der Käseherstellung verwendeten Milch, bezogen auf die Ziegenlammlipase, mit einer Aktivität von 2.500 Ramsey-Einheiten (RU) pro Gramm äquivalent ist, verwendet wird.

16. Verfahren gemäss Anspruch 15, bei welchem die Menge der Ziegenlammlipase im Bereich von 0,30 bis 0,35 g/454 kg Milch liegt.

17. Verfahren gemäss Anspruch 9, bei dem die prägastrische Lipase Kalbslipase ist und in einer Menge, die äquivalent 0,0075 bis 0,5 g pro 454 kg der bei der Käseherstellung verwendeten Milch, bezogen auf die Kalbslipase, mit einer Aktivität von 5.500 Ramsey-Einheiten (RU) pro Gramm verwendet wird.

18. Verfahren gemäss Anspruch 17, bei dem die Menge der Kalbslipase im Bereich von 0,13 bis 0,18 g/454 kg Milch liegt.

**Revendications**

1. Une composition pour accélérer le processus de vieillissement du fromage qui comprend:
a) une préparation conservée, partiellement broyée, de bactéries d'acide lactique *Lactobacillus casei, L. lactis* ou leur mélange;
b) un concentrat de culture conservé de cellules partiellement broyées de *Lactobacillus plantarum;* et
c) un mélange de lipases prégastriques séchées.

2. La composition selon la revendication 1, dans laquelle la bactérie d'acide lactique conservée est *L. casei* séché.

3. La composition selon la revendication 1, dans laquelle la bactérie d'acide lactique conservée est *L. lactis* séché.

4. La composition selon la revendication 3, dans laquelle le *L. lactis* est dénommé ATCC 39538.

5. La composition selon la revendication 1, dans laquelle le *L. plantarum* conservé est dénommé ATCC 39542 et se trouve sous la forme séchée.

6. La composition selon la revendication 1, qui contient une protéase neutre microbienne ayant une activité spécifique de 650 000 UP/g et présente en quantité suffisante pour donner jusqu'à 600 000 unités d'activité de protéase par 454 kg de lait pour fromage.

7. La composition selon la revendication 1, dans laquelle les lipases prégastriques sont des lipases de veau ou de chevreau.

8. Un procédé pour accélérer le processus de vieillissement du fromage de type américain qui consiste à ajouter au fromage pendant sa fabrication une composition qui comprend:
a) une préparation conservée, partiellement broyée, des bactéries d'acide lactique *Lactobacillus casei* ou *L. lactis* ou leur mélange dans laquelle le *L. casei,* le *L. lactis* ou leur mélange est présent en quantité de 0,001 à 0,05% en poids par rapport au lait utilisé dans la fabrication du fromage, rapportée à une activité de 140 unités standards de protéase par gramme de bactéries d'acide lactique conservées;
b) un concentrat de culture conservé de cellules partiellement broyées de *Lactobacillus plantarum* présentes en quantité de $1 \times 10^4$ à $5 \times 10^7$ UFC/ml de lait utilisé dans la fabrication du formage, rapportée à la population de cellules avant broyage pour l'accélération du processus de vieillissement du fromage;
c) un mélange de lipases prégastriques séchées.

9. Le procédé selon la revendication 8, dans lequel la bactérie d'acide lactique conservée est *L. casei* séché.

10. Le procédé selon la revendication 8, dans lequel la bactérie d'acide lactique conservée est *L. lactis* séché.

11. Le procédé selon la revendication 10, dans lequel le *L. lactis* est ATCC 39538.

12. Le procédé selon la revendication 8, dans lequel le *L. plantarum* conservé est dénommé ATCC 39542 et se trouve sous la forme séchée.

13. Le procédé selon la revendication 8, dans lequel la quantité de la bactérie d'acide lactique est de 0,025 à 0,03% en poids.

14. Le procédé selon la revendication 8, dans lequel la composition ajoutée au fromage comprend une protéase neutre microbienne ayant une activité spécifique de 650 000 UP/g en quantité suffisante pour donner jusqu'à 600 000 unités d'activité de protéase par 454 kg de lait utilisé dans la fabrication du fromage.

15. Le procédé selon la revendication 8, dans lequel la lipase prégastrique est une lipase de chevreau utilisée en quantité équivalant à 0,015 à 1,0 g par 454 kg de lait utilisé dans la fabrication du fromage, rapportée à la lipase de chevreau ayant une activité de 2 500 unités Ramsey (UR) par gramme.

16. Le procédé selon la revendication 15, dans lequel la quantité de lipase de chevreau est de 0,30 à 0,35 g/454 kg de lait.

17. Le procédé selon la revendication 9, dans lequel la lipase prégastrique est une lipase de veau utilisée en quantité équivalant à 0,0075 à 0,5 g/454 kg de lait utilisé dans la fabrication du fromage, rapportée à la lipase de veau ayant une activité de 5 500 unités Ramsey (UR) par gramme.

18. Le procédé selon la revendication 17, dans lequel la quantité de lipase de veau est de 0,13 à 0,18 g/454 kg de lait.